# EUROPÄISCHE PATENTSCHRIFT

(11) **EP 3 511 737 B1**
(45) Veröffentlichungstag und Bekanntmachung des Hinweises auf die Patenterteilung: **03.06.2020**
(21) Anmeldenummer: 18151336.7
(22) Anmeldetag: 12.01.2018
(51) Int. Cl.: G01S 13/88, G01S 13/34, G01S 13/42, H01Q 13/28

(54) **OBJEKTERKENNUNGSVORRICHTUNG UND VERFAHREN ZUM BETRIEB EINER OBJEKTERKENNUNGSVORRICHTUNG**
OBJECT DETECTION DEVICE AND METHOD FOR OPERATING SAME
DISPOSITIF DE DÉTECTION D'OBJET ET PROCÉDÉ DE FONCTIONNEMENT D'UN DISPOSITIF DE DÉTECTION D'OBJET

(43) Veröffentlichungstag der Anmeldung: 17.07.2019
(73) Patentinhaber: Leuze electronic GmbH + Co. KG, 73277 Owen/Teck (DE)
(72) Erfinder: Waldschmidt, Prof. Dr., Christian, 89081 Ulm (DE); Walter, Prof. Dr., Thomas, 71272 Renningen (DE); Geiger, Martin, 88348 Allmannsweiler (DE); Karaduman, Metin, 73278 Schlierbach (DE); Feller, Bernhard, 86316 Friedberg (DE); Quapil, Dr., Gerald, 73277 Owen/Teck (DE)
(74) Vertreter: Ruckh, Rainer Gerhard

(56) Entgegenhaltungen:
- WO-A1-2015/086346
- DE-U1-202015 106 835
- US-A1- 2016 240 907
- GEIGER MARTIN ET AL: "A flexible dielectric leaky-wave antenna at 160 GHz", 2017 47TH EUROPEAN MICROWAVE CONFERENCE (EUMC), EUROPEAN MICROWAVE ASSOCIATION, 10. Oktober 2017 (2017-10-10), Seiten 240-243, XP033284640, DOI: 10.23919/EUMC.2017.8230844 [gefunden am 2017-12-19]

## Beschreibung

Die Erfindung betrifft eine Objekterkennungsvorrichtung zur Erfassung von Hindernissen im Bewegungsbereich eines Arbeitsmittels, gemäß dem Oberbegriff des Anspruchs 1. Ferner betrifft die Erfindung ein Verfahren zum Betrieb einer Objekterkennungsvorrichtung gemäß Anspruch 17.

Arbeitsmittel, wie sich autonom bewegende Roboter mit Objekterkennungsvorrichtungen zur Vermeidung von Kollisionen des Arbeitsmittels mit einem Objekt sind bekannt. Roboter, wie etwa die zu einer Serienfertigung im Automobilbau verwendeten Industrieroboter sind frei programmierbare Handhabungsgeräte, die stationär oder auch autonom bewegbar eingesetzt werden können. Dabei können sie anhand einer programmierten Bahnplanung definierte Bewegungen durchführen und Werkstücke handhaben oder bearbeiten. Dies erfolgt beispielsweise mit einer Mechanik aus einer Anzahl an beweglichen, aneinandergeketteten Gliedern mit Achsen.

Weitere Arbeitsmittel in Form von fahrerlosen Transportsystemen werden hingegen in Industriebetrieben beispielsweise eingesetzt, um Werkstücke von einer Arbeitsstation zu einer nächsten Arbeitsstation zu transportieren. Ein solches fahrerloses Transportsystem weist dabei meist einen eigenen Fahrantrieb auf und seine Bewegungsbahn ist automatisch gesteuert. Fahrerlose Transportsysteme können auch mit Industrierobotern zu einer Einheit kombiniert sein, sodass diese Einheit in der Lage ist, an verschiedenen Arbeitsstationen bestimmte Produktions- oder Bearbeitungsschritte durchzuführen. Eine solche Einheit kann multi-oder omnidirektional beweglich sein. Zu diesem Zweck kann sie onmidirektionale Räder aufweisen, um eine hohe Beweglichkeit des fahrerlosen Transportsystems zu ermöglichen.

Um einen sicheren Betrieb eines Roboters oder fahrerlosen Transportsystems in einer Werkhalle zu gewährleisten, sind diese mit einer Objekterkennungsvorrichtung in der Art eines Laserscanners oder dergleichen ausgestattet. Mit der Objekterkennungsvorrichtung kann ein Schutzfeld um den Roboter oder um das fahrerlose Transportsystem überwacht werden. Wenn beispielsweise ein Hindernis, wie etwa ein Mensch, in das Schutzfeld eintritt, kann mittels der Objekterkennungsvorrichtung eine Verletzung des Schutzfeldes erkannt werden. In Reaktion darauf kann der Roboter oder das fahrerlose Transportsystem stoppen, um eine mögliche Kollision zu vermeiden.

Die US 4 638 445 A beschreibt eine mobile Plattform, die sich autonom, das heißt fahrerlos, fortbewegen kann. Zur Vermeidung einer Kollision der Plattform mit einem Hindernis, wie etwa einem Menschen, weist die Plattform zwei in ihrem Funktionsprinzip verschiedene Sensorgruppen auf. Eine erste Sensorgruppe ist dazu eingerichtet, Hindernisse zu erkennen, die sich in geringer Entfernung zu der mobilen Plattform befinden, während eine zweite Sensorgruppe dazu vorgesehen ist, Hindernisse in einem größeren Abstand zu der Plattform zu erkennen.

Die EP 2 407 281 B1 offenbart einen mobilen Roboter mit einem autonom fahrbaren Fahrgestell und einem darauf angebrachten Roboterarm. Der Roboter kann selbständig seinen Standort wechseln um an unterschiedlichen Orten Aufgaben zu erledigen. Der Roboter weist eine Bildauswerteeinheit für eine an ihm angeordnete Kamera auf, um eine Kollisionsvermeidung zwischen dem Roboter und seiner Umgebung zu verhindern.

Die US 2016/024 0907 A1 beschreibt ein Fahrzeug mit einer Objekterkennungsvorrichtung, mit zumindest einem ersten Objekt-Detektor zur Erfassung von Hindernissen im Bewegungsbereich des Fahrzeugs, wobei der Objekt-Detektor in der Art eines Radarmoduls mit mehreren Anschlüssen für Radarantennen gebildet ist und wobei eine jeweilige Radarantenne mit Hilfe eines dielektrischen Wellenleiters mit dem Radarmodul verbunden ist. Je ein dielektrischer Wellenleiter einer Mehrzahl von dielektrischen Wellenleitern ist an jeweils eine Stelle des Fahrzeugs geführt, um dort eine Radarantenne mit Radarsignalen im Millimeter-Wellenlängenbereich zu versorgen und von einem Objekt reflektierte Signale zu detektieren. Um ein umfassendes Bild von der Umgebung des Fahrzeugs zu bekommen, sind daher eine Vielzahl an dielektrischen Wellenleitern und Antennen notwendig.

Geiger, Martin et al. "A flexible dielectric leaky-wave antenna at 160 GHz", 2017 47th European Microwave Conference (EUMC), Euroepean Microwave Association, 10. Oktober 2017 (2017-10-10), Seiten 240 bis 243, XP033284640, DOI: 10.23919/EUMC.2017.8230844 beschreibt eine Objekterkennungsvorrichtung mit zumindest einem ersten Objekt-Detektor zur Erfassung von Hindernissen im Bewegungsbereich auf bewegten Oberflächen, wobei der Objekt-Detektor in der Art eines Radarmoduls mit ein oder mehreren Anschlüssen für Radarantennen gebildet ist, wobei eine jeweilige Radarantenne mit Hilfe eines dielektrischen Wellenleiters mit dem Radarmodul verbunden ist, und wobei die Radarantenne oder die Radarantennen in der Art von frequenzschwenkenden Leckwellenantennen mit dem dielektrischen Wellenleiter gebildet sind.

Die bekannten Objekterkennungsvorrichtungen für Fahrzeuge, wie etwa autonome mobile Roboter, sind aufwändig im Aufbau und somit verhältnismäßig teuer. Ferner weisen die bekannten Objekterkennungsvorrichtungen technisch bedingte, notwendige Mindestabstände ihrer jeweiligen Antennen zu einem zu detektierenden Objekt auf.

Der Erfindung liegt daher die Aufgabe zugrunde, eine Objekterkennungsvorrichtung, insbesondere für ein Arbeitsmittel, wie einen sich autonom bewegenden Roboter, anzugeben, die einfach und kostengünstig im Aufbau ist und deren Betrieb ein hohes Maß an Sicherheit für die Umgebung des Arbeitsmittels oder des Roboters ermöglicht.

Die Aufgabe wird mit einer Objekterkennungsvorrichtung mit den Merkmalen des Anspruches 1 und mit einem Verfahren zum Betrieb einer Objekterkennungsvorrichtung gemäß Anspruch 17 gelöst.

Bevorzugte Ausführungsbeispiele ergeben sich aus den Unteransprüchen.

Dadurch, dass die planaren holografischen Antennen an dem dielektrischen Wellenleiter so angeordnet und dimensioniert sind, dass die von einer holografischen Antenne zu einer weiteren, nächsten holografischen Antenne in dem dielektrischen Wellenleiter anliegende und über die Länge des dielektrischen Wellenleiters abnehmende Radar-Sendeleistung durch eine von einer holografischen Antenne zu einer weiteren holografischen Antenne geänderten Antennengeometrie kompensiert ist, ist eine technische Maßnahme angegeben, die es ermöglicht, dass die Empfangsleistung einer jeden planaren holografischen Antenne so angepasst ist, dass beispielsweise ein zu detektierendes Normziel oder Normobjekt, das zur Kalibrierung der Objekterkennungsvorrichtung dient, bei seinem Vorbeibewegen an den holografischen Antennen unter Einhalten eines konstanten Abstandes auch als ein mit gleichem Abstand vorbeibewegtes Objekt detektiert wird. Die Abstrahlcharakteristik der jeweiligen holografischen Antenne ändert sich dabei nicht, jedoch ihr relativer Wirkungsgrad.

In einem bevorzugten Ausführungsbeispiel der Objekterkennungsvorrichtung ist das Radarmodul in der Art eines frequenzmodulierenden Radarmoduls oder Pulsradarmoduls gebildet. Frequenzmodulierende Radarmodule, wie die bei der Erfindung eingesetzten, senden mit einer sich ständig ändernden Frequenz. Die Frequenz der emittierten elektromagnetischen Welle steigt entweder linear an um bei einem definierten Wert abrupt wieder auf den Anfangswert abzufallen oder sie steigt und fällt abwechselnd mit konstanter Änderungsgeschwindigkeit. Durch die lineare Änderung der Frequenz und durch das stetige Senden ist es möglich, neben der Differenzgeschwindigkeit zwischen Sender und Objekt auch gleichzeitig deren absolute Entfernung voneinander zu ermitteln. Das Radarmodul selbst weist hierbei vorzugsweise mehrere Sendekanäle zum Senden von frequenzmodulierten, kontinuierlichen elektromagnetischen Wellen und mehrere Empfangskanäle zum Empfangen von an einem oder an mehreren Objekten reflektierten elektromagnetischen Wellen auf. Jeweils ein Sendekanal umfaßt eine Sendeeinheit und eine Sende- oder Speiseantenne und jeweils ein Empfangskanal umfaßt eine Empfangseinheit und eine Empfangsantenne, wobei die Antenne in verschiedenen Bauarten, wie als Vivaldi-Feed, Yagi-Uda-Feed oder antipodaler Vivaldi-Feed insgesamt als End-Fire Antennen ausgeführt sein können. Die Sende- und Empfangseinheiten sind als käuflich zu erwerbende IC's verfügbar. Bei der Objekterkennungsvorrichtung gemäß der Erfindung werden einzelne Frequenzbänder, beispielsweise 10 GHz, in einem Frequenzbereich von etwa 60 bis 160 GHz genutzt.

Die Modulationsdauer kann beispielhaft etwa 10 ms betragen. Somit kann ein zu detektierendes Objekt mit einem Signal einer Frequenz f₁ angestrahlt werden, welches zu einem Zeitpunkt t₁ ausgesendet wird und zu einem Zeitpunkt t₂ wieder von einer Empfängereinheit empfangen werden. Das empfangene Signal muss im Zeitbereich der gewählten Modulationsdauer liegen. Ein FM-Synthesizer, der verschiedene Bau- und Betriebsformen aufweisen kann, wie ein direkter oder indirekter FM-Synthesizer generiert ein elektromagnetisches Signal, das vorzugsweise in seiner Frequenz vervielfacht wird und an einer jeweiligen Sendeantenne bereitgestellt wird. Mit Hilfe eines Zeitgebers, der von einem Controller angesteuert ist, wird die zeitliche Abfolge von Sende- und Empfangssignal gesteuert. Vorzugsweise sind jedoch für den betreffenden Einsatzzweck Radarmodule angewandt, die kontinuierlich senden und empfangen. Ferner werden von dem Controller die zeitliche Abfolge des Betriebes der jeweiligen Sendeeinheit und Empfangseinheit angesteuert. Die Frequenzrampe des Sendesignals wird meist von einer integrierten digitalen oder analogen Elektronik zu der tatsächlich von einer Sendeantenne ausgestrahlten Frequenz vervielfacht und hochgemischt. Das Sendesignal wird ferner in einen Mischer für das von einem rauscharmen Verstärker bereitgestellte Empfangssignal eingespeist. Der Mischer stellt hierbei ein herabgemischtes Empfangssignal bereit, das einem Differenzsignal der Empfangssignale des rauscharmen Verstärkers und dem Sendesignal entspricht. Das Differenzsignal wird als Basis zur Auswertung der Distanz, Geschwindigkeit und Winkellage eines detektierten Objektes genutzt.

Die an eine jeweilige Sende-/Empfangseinheit eines Radarmoduls angeschlossenen Radarantennen in der Bauform als frequenzschwenkende Leckwellenantennen sind von zwei wesentlichen Bauelementen, nämlich einem dielektrischen Wellenleiter und mit diesem zu einer Einheit zusammengefassten und an oder auf dem dielektrischen Wellenleiter angeordneten, planaren, holografischen Antenne geprägt.

Gemäß der Erfindung werden dielektrische Wellenleiter zur Leitung der Sende- und Empfangssignale von einer jeweiligen Sendeeinheit eines Radarmoduls zu den holografischen Antennen und von dort wiederum zu einer Empfangseinheit eines jeweiligen Radarmoduls genutzt. Dielektrische Wellenleiter sind an sich bekannt und verwenden, im Gegensatz zu einem metallischen Hohlleiter, zum Leiten von elektromagnetischen Wellen einen dielektrischen Leiter der flexibel sein kann. Ein dielektrischer Wellenleiter nutzt Materialien mit einer hohen Polarisierbarkeit (relative Permittivität εk), wobei die relative Permittivität einen Faktor darstellt, der eine Feldschwächung oder Verstärkung eines elektrischen Feldes durch ein Material ausdrückt. Damit ein dielektrischer Leiter in prinzipiell gleicher Weise wie ein metallischer Hohlleiter, nur eben mit geringeren Energieverlusten, elektromagnetische Wellen zu leiten in der Lage ist, ist dieser aus einem Kern und einer Hülle aufgebaut, wobei das den Kern bildende Material eine höhere relative Permittivität aufweist als das die Hülle bildende Material. Hülle und Kern haben vorzugsweise eine rechteckige oder quadratische Querschnittsform um horizontal oder vertikal polarisierte elektromagnetische Wellen vorteilhaft leiten zu können und um deren Polarisation erhalten zu können. Um eine gewünschte Ausbreitung der elektromagnetischen Wellen in dem Wellenleiter und an, an diesem vorgesehenen frequenzschwenkenden Antennen zu ermöglichen, muß die relative Permittivität der Hülle größer sein als die relative Permittivität ihrer Umgebung, wie etwa Luft. Verschiedene Polyethylen-Typen eignen sich zur Darstellung von dielektrischen Wellenleitern und andere gesättigte oder ungesättigte Elastomere ebenso. Typische Querschnitte solcher dielektrischer Wellenleiter sind von den verwendeten Frequenzbändern der elektromagentischen Wellen abhängig und betragen für den Kern bei einer Frequenz von ca. 80 GHz etwa 0,5 - 1,0 mm x 2,0 mm. Gemäß der Erfindung sind als konstruktive Einheit mit dem jeweiligen dielektrischen Wellenleiter und über dessen Länge in einer Mehrzahl frequenzschwenkende Leckwellenantennen angeordnet. Dadurch ist es ermöglicht, dass mit einem einzigen Radarmodul und mit einem einzigen dielektrischen Wellenleiter eine Vielzahl an Radarantennen und somit eine Vielzahl an Sensoren zur Erkennung von Objekten in der Umgebung eines Arbeitsmittels verwirklicht sind. Eine Kostenreduktion bei der erfindungsgemäßen Objekterkennungseinrichtung ist damit bewirkt. Eine Verbesserung der Auflösegenauigkeit ebenso.

Frequenzschwenkende Leckwellenantennen können verschiedenartige abstrahlende Elemente, wie Schlitze in einem Wellenleiter mit Massefläche (durchgezogene Metallisierung) aufweisen und geben Sendeleistung in kleinen Einheiten pro Längeneinheit entweder fortlaufend oder, gemäß der Erfindung, durch eine Leckwellenstruktur an diskreten Stellen (Störstellen) in den Freiraum ab. Hierbei ist die Lage und Art des Wellenleiter dahingehend bedeutsam, dass die Restenergie am Wellenleiter-Ende absorbiert oder abgestrahlt werden muss um die Entstehung einer stehenden elektromagnetischen Welle im Wellenleiter zu verhindern. Die Hauptstrahlrichtung einer Leckwellenantenne wird dabei mittels Frequenzmodulation bewirkt und nicht, wie bei anderen Antennenbauarten, durch elektronische oder mechanische Phasenverschiebungseinrichtungen. Die Summe der Anordnung der Störstellen (Hologramm) ermöglicht die Entstehung von Floquet-Moden. Diese Floquet-Moden geben Sendeleistung in den Freiraum ab und sind bei dielektrischen Wellenleitern, die nur Phasengeschwindigkeiten kleiner der Lichtgeschwindigkeit erlauben, notwendig um Abstrahlung in den Freiraum erzeugen zu können. Es können sich hierbei an den diskreten Störstellen Hauptkeulen der Radarstrahlung ausbilden, die durch die Frequenzmodulation der elektromagnetischen Welle um höchstens 180° schwenken können und so zur Erkennung eines Objekts in der Umgebung des Arbeitsmittels dienen können. Um eine hohe Antenneneffizienz zu erhalten, ist es erforderlich, die Störstellen (Schlitze, patch-Elemente) an Positionen des dielektrischen Wellenleiters anzuordnen, an denen Wandströme maximal sind. Bei der Objekterkennungsvorrichtung gemäß der Erfindung werden periodisch angeordnete patch-Elemente oder patch-Antennen auf dem dielektrischen Wellenleiter mit durchgezogener Metallisierung auf einer Substratunterseite des Wellenleiters angeordnet. Diese Struktur wirkt zwar wie eine hochohmige Oberfläche, besteht im Einzelnen aber aus metallischen Elementen (patches), die einen direkten Einfluß auf die Feldlinien der dadurch transmittierenden Oberflächenwelle ausüben können. Durch die durchgezogene Metallisierung wird eine zweite Hauptkeule der elektromagnetischen Strahlung fast vollständig unterdrückt. Es ergibt sich eine Steigerung des Antennengewinns dadurch. Durch die Auskopplung der Radarsignale über Leckwellenantennen aus einem sehr dünnen dielektrischen Leiter kann eine vergleichsweise große Totzone, wie sie bei bekannten Radarsendern auftritt, umgangen werden und so quasi die Totzone auf eine der Stärke der Hülle des dielektrischen Wellenleiters entsprechendes Maß (Millimeterbereich) reduziert werden.

In einem bevorzugten Ausführungsbeispiel der Objekterkennungsvorrichtung sind zumindest ein Sendekanal und ein Empfangskanal eines Radarmoduls über einen dielektrischen Wellenleiter mit darauf angeordneten Leckwellenantennen verbunden. Mithin wird so jeder Wellenleiter mit seinen Enden schleifenförmig an je einen Sende-/Empfangskanal des Radarmoduls angeschlossen. Werden Sende-/Empfangskanal periodisch umgeschaltet, oder ist eine jeweilige Antenne sowohl für gleichzeitiges Senden als auch für Empfangen eingesetzt, so können die von einem Objekt reflektierten und empfangenen Signale verglichen und eine Funktionsprüfung der Objekterkennungsvorrichtung kann so durchgeführt werden.

Die frequenzschwenkenden Leckwellenantennen können, wie erwähnt, als planare holografische Antennen gebildet sein, wobei sich die in dem dielektrischen Wellenleiter geführten Mode, die Art und Position und die Anzahl der Störstellen zur Auskopplung von Sendeleistung und zur Generierung des Hologramms, wie auch der Aufbau des Substrats an dem die Störstellen angeordnet sind, unterscheiden können.

In einem besonders kostengünstig zu erstellenden Ausführungsbeispiel der Objekterkennungsvorrichtung sind die holografischen Antennen jeweils aus einer Mehrzahl in Gruppen zusammengefaßten metallischen patch-Antennen gebildet. Hier reduziert sich vorzugsweise die Zahl der patch-Antennen von 15, bei nur einer holografischen Antenne an einem dielektrischen Wellenleiter, auf 4 patch-Antennen, wenn drei holografische Antennen an einem dielektrischen Wellenleiter angeordnet werden sollen. Die metallischen patch-Antennen bestehen bevorzugt aus einer Schicht Titan und einer darauf aufgedampften Schicht Aluminium. Eine jeweilige patch-Antenne kann eine Breite jedes Einzelelements von etwa 1,3 mm und eine Gesamtlänge der beiden Elemente von etwa 3 mm aufweisen, was eine vorteilhafte Ausbreitungscharakteristik bewirkt.

Zur Überprüfung der Funktion der Einheit aus dielektrischem Wellenleiter und frequenzschwenkender Leckwellenantenne einschließlich des zugeordneten Radarmoduls ist in einem besonders bevorzugten Ausführungsbeispiel der Objekterkennungsvorrichtung an einem freien, von dem Radarmodul abgewandten Ende des dielektrischen Wellenleiters eine zuäußerst angeordnete holografische Antenne mit einem Abstand zu dem Ende des Wellenleiters angeordnet, der so gewählt ist, dass dieser einer Signaldurchlaufzeit durch den Wellenleiter bedarf, die größer ist als eine Signallaufzeit von jeder holografischen Antenne an dem dielektrischen Wellenleiter und als eine Signallaufzeit von dem Ende des dielektrischen Wellenleiters zu einem am weitest entfernt liegend angenommenen Objekt. Ist kein Objekt im Detektionsbereich der Objekterkennungsvorrichtung, kann so die Funktion der Antennen und des Wellenleiters überwacht werden, da in diesem Fall die Signallaufzeit für den Abstand bis zu dem Ende des Wellenleiters detektiert wird. Dieser ist aber bekannt.

Zur Überwachung der Bewegung und zur Kollisionsvermeidung von Arbeitsmitteln mit ihrer Umgebung kann es vorteilhaft sein, mehrere Radarmodule und mehrere holografische Antennen zu einem Netzwerk mit vorzugsweise hierarchischer Struktur zusammenzufassen. Die von einem Master-Radarmodul ermittelten Objektdaten können mit Betriebsdaten einer Steuer- und/oder Regeleinheit des Arbeitsmittels zur Steuerung der Bewegung des Arbeitsmittels verknüpft sein.

Vorteilhaft werden durch die Sendekanäle der Radarmodule einzelne Frequenzbänder in einem Frequenzbereich von etwa 60 bis 160 GHz genutzt. Ein Frequenzband hat typischerweise eine Breite von etwa 10 GHz.

In einem Verfahren zum Betrieb der Objekterkennungsvorrichtung werden in einem ersten Verfahrensschritt Objektbewegungen und Objektabstände zu dem Arbeitsmittel detektiert und in einem weiteren Verfahrensschritt wird eine Verletzung einer Warnzone und/oder einer Schutzfeldzone um das Arbeitsmittel ermittelt und an eine Ausgabeeinheit ausgegeben. Die Ausgabeeinheit kann ein optisch wahrnehmbares Wirkprinzip oder ein akustisches oder ein haptisches Wirkprinzip aufweisen. Es kann auch vorteilhaft sein, eine Relativgeschwindigkeit mit der sich ein Objekt in das Schutzfeld hineinbewegt, zu ermitteln. Es versteht sich, dass auch ein Notstop des Arbeitsmittels ausgelöst werden kann.

Ausführungsbeispiele der Erfindung sind nachfolgend anhand der Zeichnungen wiedergegeben. In den Zeichnungen zeigt:
- Figur 1:: Eine schematische Draufsicht auf eine erfindungsgemäße Objekterkennungsvorrichtung.
- Figur 2:: Ein Detail I in Figur 1.
- Figur 3 a):: Einen schematischen, nicht maßstäblichen Querschnitt durch einen dielektrischen Wellenleiter mit einer patch-Antenne einer planaren, holografischen Antenne.

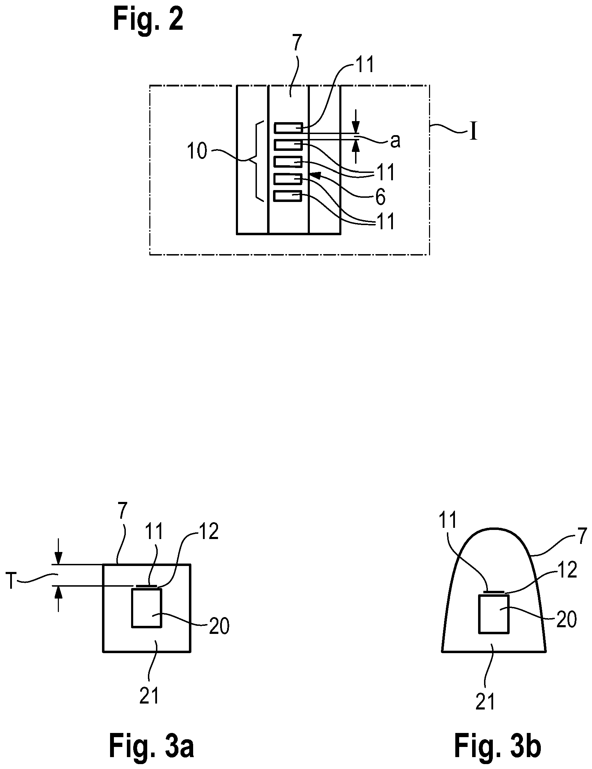

- Figur 3 b):: Einen weiteren schematischen, nicht maßstäblichen Querschnitt durch einen dielektrischen Wellenleiter mit einer patch-Antenne einer planaren holografischen Antenne.

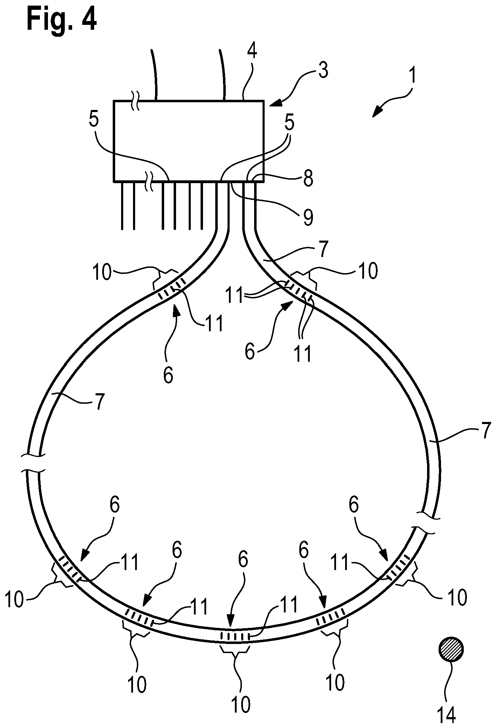

- Figur 4:: Eine schematische Draufsicht auf ein weiteres Ausführungsbeispiel einer erfindungsgemäßen Objekterkennungsvorrichtung.

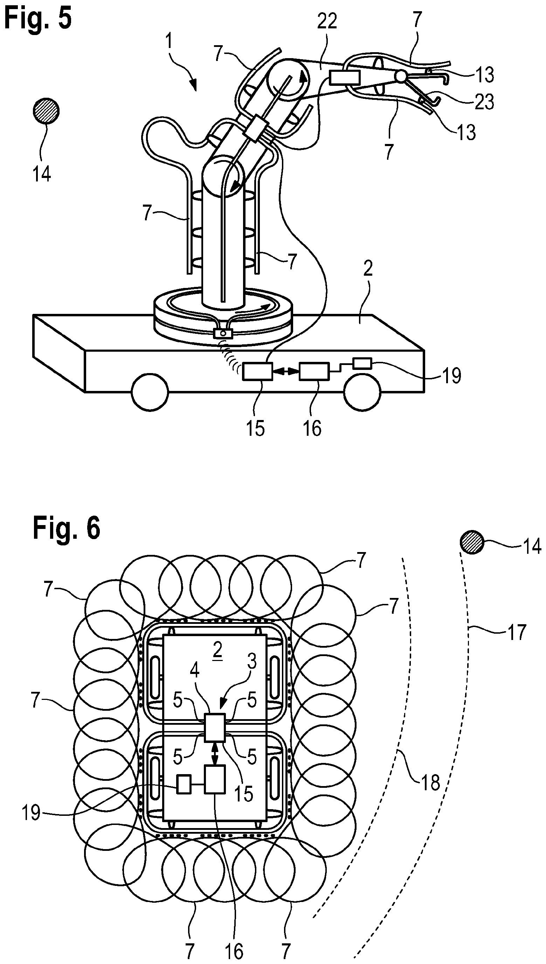

- Figur 5:: Eine schematische, perspektivische Ansicht eines als autonom sich bewegenden Roboters gebildeten Fahrzeugs mit einer erfindungsgemäßen Obj ekterkennungsvorrichtung.
- Figur 6:: Eine schematische Draufsicht auf ein Fahrgestell des in Figur 5 gezeigten Roboters mit einer erfindungsgemäßen Objekterkennungsvorrichtung.

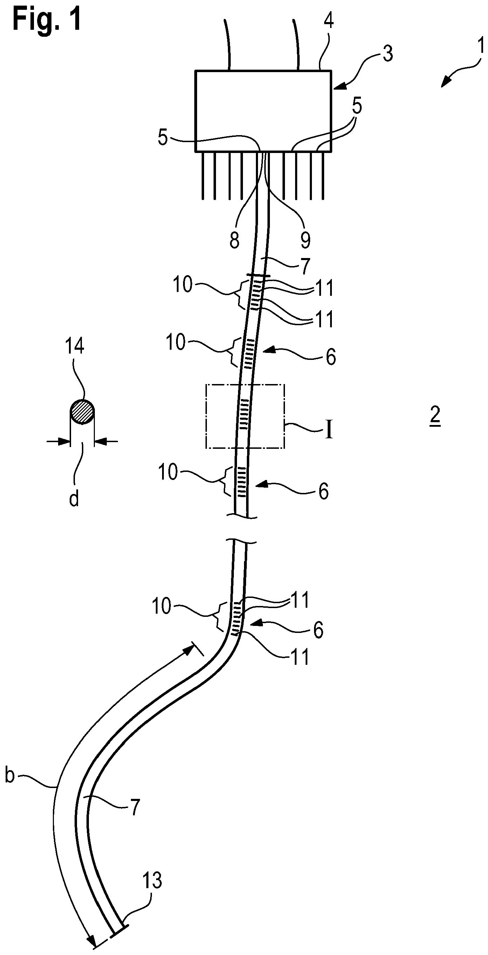

In Figur 1 ist in einer schematischen Draufsicht ein Ausführungsbeispiel einer Objekterkennungsvorrichtung 1 für ein in Figur 5 gezeigtes Fahrzeug 2 als Beispiel eines Arbeitsmittels gezeigt. Das Fahrzeug 2 ist als autonomer, mobiler Roboter gebildet, wobei die Objekterkennungsvorrichtung 1 dazu vorgesehen ist, Gefahren, die von der Bewegung des Fahrzeugs 2 und von der Bewegung von Teilen des Roboters, wie eines Greiferarms und dessen daran angeordneten Handhabungswerkzeugen, für dessen Umgebung zu minimieren, bzw. auszuschließen. Die Objekterkennungsvorrichtung 1 weist hierzu einen Objekt-Detektor 3 in der Art eines Radarmoduls 4 mit mehreren Anschlüssen für Radarantennen 6 beziehungsweise für dielektrische Wellenleiter 7 auf. An den dielektrischen Wellenleitern 7 sind Radarantennen 6 angeordnet. Die Radarmodule 4 dienen zur Bereitstellung hochfrequenter elektromagnetischer Wellen an die Antennen 6 und zur Durchführung des Betriebs der Antennen in einem Zeitmultiplexbetrieb. Eine jeweilige Antenne 6 dient dabei abwechselnd oder kontinuierlich zum Senden von elektromagnetischen Wellen und zum Empfangen von an einem Objekt reflektierter elektromagnetischer Wellen. Dem Radarmodul 4 zugehörige, nicht gezeigte Auswerteeinrichtungen ermitteln hierbei die Winkellage und die Entfernung eines Objektes14 zu der jeweiligen Radarantenne 6. Um die Kosten für eine Objekterkennungsvorrichtung 1 zu reduzieren, ist vorgesehen, dass an dem dielektrischen Wellenleiter 7 vorzugsweise eine Mehrzahl frequenzschwenkender Leckwellenantennen als Radarantennen 6 angeordnet sind und dass das Radarmodul 4 in einer frequenzmodulierenden Betriebsweise arbeitet. Sogenannte FMCW-Radargeräte oder Objekterkennungsvorrichtungen senden mit einer sich ständig ändernden Frequenz, beispielsweise in einem 10 GHz-Band elektromagnetische Wellen. Dabei existieren verschiedene Muster der Frequenzänderung in Abhängigkeit von der jeweiligen Konzeption des Radarmoduls 4. Beispielsweise steigt in einer Betriebsart des Radarmoduls 4 die Frequenz linear an, um bei einem definierten Wert abrupt wieder auf einen Anfangswert abzufallen oder die Frequenz steigt und fällt abwechselnd mit konstanter Änderungsgeschwindigkeit. Dadurch ist es möglich, neben der Differenzgeschwindigkeit zwischen Antenne 6 und dem Objekt 14 auch die Objektentfernung zu der Antenne 6 zu ermitteln. Die in ihrer Frequenz sich ändernden elektromagentischen Einzelimpulse sind sehr kurz - im niedrigen Mikrosekundenbereich - wobei die Laufzeit des Impulses, die Zeit zwischen Senden und dem Empfang des Signals gemessen und zur Entfernungsbestimmung genutzt wird.

Bei den frequenzschwenkenden Antennen 6, die nachfolgend in der Bauart als planare, holografische Antennen 10 beschrieben werden, kann die Hauptstrahlrichtung einer Antenne 10 über die Frequenz der sie speisenden elektromagnetischen Welle geändert werden. Die Kombination einer frequenzschwenkenden Leckwellenantenne mit einem frequenzmodulierenden Radarmodul erlaubt dabei eine weitere, zweite Detektionsebene auf das Objekt 14, indem die jeweilige Antennenhauptkeule der emittierten Strahlung in dieser Ebene über ein Phasenschaltnetzwerk geschwenkt wird. Eine mechanische Bewegung von Bauteilen oder des dielektrischen Wellenleiters 7 mit den Antennen 10 entfällt hierbei. Der Aufbau der Objekterkennungsvorrichtung 1 vereinfacht sich im zu bekannten Objekterkennungsvorrichtungen aus dem Stand der Technik erheblich, zumal Komponenten des zum Betrieb der Antenne 6 erforderlichen Speisenetzwerkes (Radarmodul) als Serienteile käuflich zu erwerben sind.

Die dielektrischen Wellenleiter 7 dienen - ähnlich wie metallische Hohlleiter - zur Führung der elektromagnetischen Welle und bestehen in den gezeigten Ausführungsbeispielen aus Polyethylenkunststoffen unterschiedlicher relativer Pemittivität εk. Eine rechteckige Querschnittsform, wie in Figur 3a gezeigt, ist zu bevorzugen, da diese Querschnittsform die Polarisation der elektromagnetischen Welle über die Länge des Wellenleiters 7 erhält. Der dielektrische Wellenleiter 7 ist aus einem Kern 20 und einer diesen vollständig umgebenden Hülle 21 gebildet und weist in Abhängigkeit von dem jeweiligen, gewählten Frequenzband unterschiedliche Abmessungen auf. Lediglich beispielhaft sei hier ein Maß für den Kern 20 von 0,5 mm x 1,0 mm genannt, das bei einer Frequenz der elektromagnetischen Welle um 80 GHz geeignet ist. Die Hülle 21 weist hierbei eine Wanddicke von wenigen 1/10 mm auf. Die relative Permittivität εk₁ des Kerns 20 ist größer (zum Beispiel 3-12) als die relative Permittivität εk₂ der Hülle 21 (zum Beispiel 2,5-4,5). Wie bereits oben erwähnt, sind auch andere Arten von Kunststoffen, wie etwa gesättigte oder ungesättigte Elastomere zur Herstellung der Hülle 21 und des Kerns 20 einsetzbar.

Die an dem dielektrischen Wellenleiter 7 angeordneten Antennen 6 sind durch periodisch angeordnete Störstellen im Substrat 12 zwischen Kern 20 und Hülle 21 in Form von metallischen patch-Antennen 11 gebildet und bewirken jeweils eine lokale Abstrahlung von elektromagnetischer Strahlung, insbesondere in Form von Hauptkeulen. Dabei wird die Energie der elektromagnetischen Welle in dem dielektrischen Wellenleiter 7 nach und nach in den Freiraum abgestrahlt und verringert sich zum jeweiligen Ende 13 des Wellenleiters 7. Eine Restenergie wird an dem freien Ende 13 (vergleiche Figur 1) absorbiert oder ebenfalls abgestrahlt. Insgesamt kann man diese Art der Bildgebung bzw. des Detektierens von Objekten und Abbilden dieser durch Radarsignalen in Analogie zu dem optischen Verfahren der Holografie sehen. Die wechselseitige periodische Anordnung der Störstellen ist notwendig, damit eine phasengleiche Überlagerung der Abstrahlung aller Einzelelemente oder patch-Antennen 11 erfolgen kann (vergleiche Figur 2). Eine Durchkontaktierung der gezeigten Antennen 10, ist bei den vorliegenden, sehr hohen Frequenzen der Wellen nicht erforderlich, kann aber gewählt werden um etwa eine Zhang-Struktur aus periodisch angeordneten patch-Elementen auf einem Substrat mit durchgezogener Metallisierung auf der Substratunterseite auszubilden.

Wie Figur 3a und 3b zeigen, können die geometrischen Abmessungen, insbesondere die Stärke der Hülle 21 eines dielektrischen Wellenleiters 7 verschieden gewählt sein, wobei dadurch zusammen mit der Permittivität des Hüllenmaterials der Schwenkbereich der frequenzschwenkenden Leckwellenantenne beeinflußbar ist.

In einem in Figur 4 gezeigten, bevorzugten Ausführungsbeispiel der Erfindung ist ein Sendekanal 8 und ein Empfangskanal 9 des Radarmoduls 4 über einen dielektrischen Wellenleiter 7 schleifenartig verbunden, wobei im Betrieb des Radarmoduls 4 der Sendekanal 8 und der Empfangskanal 9 periodisch umgeschaltet sind oder auch ein Sendekanal 8 gleichzeitig als Empfangskanal 9 und ein Empfangskanal 9 gleichzeitig als Sendekanal 8 genutzt wird. Somit können durch Signalvergleich die Funktionen der Antenne 10 und des gesamten, im Einzelnen nicht gezeigten Speisenetzwerkes (Radarmodul) geprüft werden.

In den in allen Figuren gezeigten Ausführungsbeispielen sind die frequenzschwenkenden Leckwellenantennen als planare holografische Antennen 10 gebildet und dadurch leicht in das aus Hülle 21 und Kern 20 gebildete Substrat 12 des dielektrischen Wellenleiters 7 integrierbar. Wie in einem vergrößerten Detail I in der Figur 2 und auch in den Figuren 3a und 3b gezeigt ist, ist jede Antenne 10 aus mehreren plättchenartigen patch-Antennen 11 gebildet. Diese patch-Antennen 11 oder patch-Elemente 11 sind aus einer Schicht Titan und einer darauf aufgedampften Schicht Aluminium gebildet, wobei deren Breiten etwa 1,3 mm und deren einzelne Längen 200µm bis 1 mm betragen. Diese Dimensionierung erfolgt in Abhängigkeit von der gewählten Frequenz der elektromagnetischen Welle. In Bezug auf die Leistungsabstrahlung einer planaren, holografischen Antenne 10 durch die einzelnen patch-Antennen 11 ist es vorteilhaft, wenn eine Antenne jeweils aus 15 patch-Antennen 11 gebildet wird. Sollen bis zu 3 Antennen 10 auf einem dielektrischen Wellenleiter 7 platziert werden, sollte die Anzahl der patch-Antennen 11 unter 4 bleiben.

Die Materialstärke der Hülle 21 bestimmt die Totzone (T) der frequenzschwenkenden Leckwellenantenne und diese ist vergleichsweise minimal im Verhältnis zu bisher bekannten Antennenbauarten (vergleiche Figur 3a). Jede patch-Antenne 11 weist bevorzugt eine Breite von 1,3 mm und eine Gesamtlänge von etwa 3 mm aufweist.

Wie erwähnt, nimmt die Sendeleistung der in dem dielektrischen Wellenleiter 7 geführten elektromagnetischen Welle über die Entfernung von dem Sendekanal 8 ab. Zur Kompensation des Leistungsverlustes wird die Geometrie der planeren holografischen Antenne 10 über die Länge des dielektrischen Wellenleiters 7 angepaßt. Dadurch wird die Empfangsleistung einer jeden planaren holografischen Antenne 10 so angepaßt, das beispielsweise ein zu detektierendes Normziel oder Normobjekt, das zur Kalibrierung der Objekterkennungsvorrichtung 1 dient, bei seinem Vorbeibewegen an den holografischen Antennen 10 unter Einhalten eines konstanten Abstandes auch als ein mit gleichem Abstand vorbeibewegtes Objekt 14 detektiert wird.

Die Anpassung der Antennengeometrie ist von den zuvor genannten Parametern, wie Sendefrequenz, relative Permittivität der Substrate und der Grundgeometrie der patch-Antennen abhängig.

Um die Trennfähigkeit der Objekterkennungsvorrichtung 1 zu minimieren, ist, wie Figur 2 zeigt, der Abstand a zwischen den einzelnen patch-Antennen 11 einer jeden holografischen Antenne 10 objektspezifisch für die gewählte Frequenz und Anordnung empirisch ermittelt und so gewählt, dass dieser geringer ist, als der kleinste zu detektierende Objektdurchmesser d des Objekts 14. Der Schwenkbereich der jeweiligen holografischen Antenne 10 kann etwa +/- 60° betragen. Vorzugsweise ist bei einer Bandbreite von 10 GHz der Schwenkbereich 5°. Die Keulenbreite der Antenne 10 beträgt maximal 35°. Bei einem besonders bevorzugten Ausführungsbeispiel beträgt die Keulenbreite 22° x 70°.

Um mit geringstem konstruktiven Aufwand eine Plausbilitätsprüfung der detektierten Signale einer erfindungsgemäßen Objekterkennungsvorrichtung 1 durchführen zu können, vorzugsweise während eines normalen Betriebes der Vorrichtung 1, ist in einem besonders bevorzugten Ausführungsbeispiel der Erfindung der Abstand b von einem freien, von dem Radarmodul 4 abgewandten Ende 13 des dielektrischen Wellenleiters 7 zu einer an diesem zuäußerst angeordneten holografischen Antenne 10 so gewählt, dass für diesen Abstand b eine Signallaufzeit erforderlich ist, die größer ist, als die Signallaufzeit von irgendeiner holografischen Antenne 10 an dem Wellenleiter 7 und größer ist als eine Signallaufzeit vom Ende 13 zu einem davon am weitest entfernt angenommenen Objekt 14. Ist das Objekt 14 nicht im Detektionsbereich der Objekterkennungsvorrichtung 1, kann so die Funktion der Antennen 10 überwacht werden, indem ein der Länge des Abstandes b entsprechendes Signal detektiert wird.

In Abhängigkeit von der Größe oder auch der Gestaltsform des Fahrzeugs oder autonomen mobilen Roboters kann es erforderlich sein, zur vollständigen Überwachung der Umgebung des Fahrzeugs mehrere Radarmodule 4 mit einer Mehrzahl an frequenzschwenkenden Leckwellenantennen 6 zu einem Netzwerk vorzugsweise mit hierarchischer Struktur zusammen zu fassen. Ein solches Netzwerk mit einem Master-Radarmodul 15 ist in den Figuren 5 und 6 schematisch gezeigt. Das Master-Radarmodul 15 kann solitär oder in Zusammenwirkung mit einer Steuer- und/oder Regeleinheit 16 des Fahrzeugs 2 Objektdaten, die von der Objekterkennungsvorrichtung 1 ermittelt werden, zur Steuerung der Bewegungen des Fahrzeugs 2 und der daran angeordneten Roboterarme 22 und Handhabungswerkzeuge 23 heranziehen. Hierbei können die einzelnen Radarmodule 4 mit dem Master-Radarmodul 15 über verschiedene Schnittstellen, wie eine Feldbusschnittstelle, ein I/O-Link-Interface oder eine Internetschnittstelle kommunizieren. Die Radarmodule 4 können untereinander ihre Empfangssignale austauschen. Von der Steuer- und/oder Regeleinheit 16 können an das Master-Radarmodul 15 Informationen über Betriebszustände des Fahrzeugs 2 übermittelt werden, die vom Master-Radarmodul 15 zur Interpretation der Empfangssignale herangezogen werden. Die Steuer- und/oder Regeleinheit 16 und das Master-Radarmodul 15 können über eine Funkstrecke mit einer Bedienperson oder einer anders definierten Umgebung des Fahrzeugs 2 kommunizieren.

Bei einem Verfahren zum Betrieb der Objekterkennungsvorrichtung 1 können in einem ersten Verfahrensschritt von der Objekterkennungsvorrichtung 1 Objektbewegungen und Objektabstände relativ zu dem Fahrzeug 2 detektiert werden und in einem zweiten Verfahrensschritt eine Verletzung einer Warnzone 17 oder einer Schutzfeldzone 18 um das Fahrzeug 2 detektiert und an eine Ausgabeeinheit 19 ausgegeben werden. Durch die Ausgabeeinheit 19 kann die Umgebung des Fahrzeugs 2 durch eine Signalgebung über den Betriebszustand des Fahrzeugs informiert und gegebenenfalls gewarnt werden. Ein Nothalt des Fahrzeugs 2 nebst Aufbauten ist selbstredend hier involviert.

### Bezugszeichenliste

- (1): Objekterkennungsvorrichtung
- (2): Fahrzeug
- (3): Objekt-Detektor
- (4): Radarmodul
- (5): Anschluss, für 6
- (6): Radarantenne
- (7): Wellenleiter, dielektrisch
- (8): Sendekanal
- (9): Empfangskanal
- (10): planare, holografische Antenne
- (11): metallische patch-Antenne
- (12): Substrat, von 7
- (13): Ende, von 7
- (14): Objekt
- (15): Master Radarmodul
- (16): Steuer- und/oder Regeleinheit
- (17): Warnzone
- (18): Schutzfeldzone
- (19): Ausgabeeinheit
- (20): Kern, von 7
- (21): Hülle, von 7
- (22): Roboterarm
- (23): Handhabungswerkzeug
- a: Abstand
- b: Abstand, 10 zu 13
- d: Objektdurchmesser
- T: Totzone
- εk₁: relative Permittivität, von 20
- εk₂: relative Permittivität, von 21

## Patentansprüche

1. Objekterkennungsvorrichtung (1) mit zumindest einem ersten Objekt-Detektor (3) zur Erfassung von Hindernissen im Bewegungsbereich eines Arbeitsmittels, wobei der Objekt-Detektor (3) in der Art eines Radarmoduls (4) mit ein oder mehreren Anschlüssen (5) für Radarantennen (6) gebildet ist, wobei eine jeweilige Radarantenne (6) mit Hilfe eines dielektrischen Wellenleiters (7) mit dem Radarmodul (4) verbunden ist, wobei die Radarantennen (6) in der Art von frequenzschwenkenden Leckwellenantennen mit dem dielektrischen Wellenleiter (7) gebildet sind, und wobei die frequenzschwenkenden Leckwellenantennen als planare holografische Antennen (10) gebildet sind, **dadurch gekennzeichnet, daß** die planaren holografischen Antennen (10) an dem dielektrischen Wellenleiter (7) so angeordnet und dimensioniert sind, dass die von einer holografischen Antenne (10) zu einer weiteren, nächsten holografischen Antenne (10) anliegende und über die Länge des dielektrischen Wellenleiters (7) abnehmende Radar-Sendeleistung durch eine von einer holografischen Antenne (10) zu einer weiteren holografischen Antenne (10) geänderten Antennengeometrie kompensiert ist.

2. Objekterkennungsvorrichtung (1) nach Anspruch 1, **dadurch gekennzeichnet, dass** das Radarmodul (4) in der Art eines frequenzmodulierenden Radarmoduls oder Pulsradarmoduls gebildet ist.

3. Objekterkennungsvorrichtung (1) nach Anspruch 1 oder 2, **dadurch gekennzeichnet, dass** zumindest ein Sendekanal (8) und ein Empfangskanal (9) des Radarmoduls (4) über den dielektrischen Wellenleiter (7) mit den frequenzschwenkenden Leckwellenantennen verbunden ist und dass im Betrieb des Radarmoduls (4) der Sendekanal (8) und der Empfangskanal (9) parallel oder periodisch umgeschaltet sind.

4. Objekterkennungsvorrichtung (1) nach einem der Ansprüche 1 bis 3, **dadurch gekennzeichnet, dass** die holografischen Antennen (10) jeweils aus einer Mehrzahl an metallischen patch-Antennen (11) gebildet sind, die auf einem Substrat (12) des dielektrischen Wellenleiters (7) angeordnet sind.

5. Objekterkennungsvorrichtung (1) nach Anspruch 4, **dadurch gekennzeichnet, dass** die metallischen patch-Antennen (11) jeweils aus einer Schicht Titan und einer darauf aufgedampften Schicht Aluminium gebildet sind.

6. Objekterkennungsvorrichtung (1) nach einem der Ansprüche 4 oder 5, **dadurch gekennzeichnet, dass** das Substrat (12) mit oder ohne durchgezogene Metallisierung gebildet ist.

7. Objekterkennungsvorrichtung (1) nach einem der Ansprüche 4 bis 6, **dadurch gekennzeichnet, dass** eine jeweilige patch-Antenne (11) aus jeweils zwei patch-Elementen gebildet ist und eine Breite von etwa 1,3 mm und eine Gesamtlänge von etwa 3 mm aufweist.

8. Objekterkennungsvorrichtung (1) nach einem der Ansprüche 3 bis 7, **dadurch gekennzeichnet, dass** jede holografische Antenne (10) aus bis zu 15 patch-Antennen (11) gebildet ist.

9. Objekterkennungsvorrichtung (1) nach einem der Ansprüche 3 bis 8, dass bei einer Anordnung von drei holografischen Antennen (10) auf einem dielektrischen Wellenleiter (7) eine jeweilige holografische Antenne (10) aus weniger als vier patch-Antennen (11) gebildet ist.

10. Objekterkennungsvorrichtung (1) nach einem der Ansprüche 4 bis 9, **dadurch gekennzeichnet, dass** ein Abstand (a) der patch-Antennen (11) an dem dielektrischen Wellenleiter (7) so gewählt ist, dass der Abstand (a) kleiner als der kleinste zu detektierende Objektdurchmesser (d) ist.

11. Objekterkennungsvorrichtung (1) nach einem der Ansprüche 1 bis 10, **dadurch gekennzeichnet, dass** der Schwenkbereich einer jeweiligen holografischen Antenne (10) etwa +/- 60 ° beträgt.

12. Objekterkennungsvorrichtung (1) nach einem der Ansprüche 1 bis 11, **dadurch gekennzeichnet, dass** an einem freien, von dem Radarmodul (4) abgewandten Ende (13) des dielektrischen Wellenleiters (7) eine zuäußerst angeordnete holografische Antenne (10) mit einem Abstand (b) zu dem Ende (13) angeordnet ist, und dass der Abstand (b) so gewählt ist, dass dieser einer Signaldurchlaufzeit bedarf, die größer ist, als eine Signallaufzeit von jeder holografischen Antenne (10) an dem dielektrischen Wellenleiter (7) und größer ist, als die Signallaufzeit von dem Ende (13) des dielektrischen Wellenleiters (7) zu einem am weitesten entfernt liegenden angenommenen Objekt (14).

13. Objekterkennungsvorrichtung (1) nach einem der Ansprüche 1 bis 12, **dadurch gekennzeichnet, dass** die Objekterkennungsvorrichtung (1) mehrere Radarmodule (4) und mehrere holografische Antennen (10) umfasst, und dass die Radarmodule (4) zu einem Netzwerk zusammengefasst sind, das vorzugsweise eine hierarchische Struktur aufweist.

14. Objekterkennungsvorrichtung (1) nach Anspruch 13, **dadurch gekennzeichnet, dass** die von einem Master-Radarmodul (15) der Objekterkennungsvorrichtung (1) ermittelten Objektdaten mit Betriebsdaten einer Steuer-und/oder Regeleinheit (16) des Arbeitsmittels zur Steuerung der Bewegung des Arbeitsmittels verknüpft sind.

15. Objekterkennungsvorrichtung (1) nach einem der Ansprüche 1 bis 14, **dadurch gekennzeichnet, dass** durch die Radarmodule (4) einzelne Frequenzbänder in einem Frequenzbereich von etwa 60 bis 160 GHz genutzt sind.

16. Objekterkennungsvorrichtung (1) nach Anspruch 15, **dadurch gekennzeichnet, dass** ein Frequenzband eine Bandbreite von etwa 10 GHz aufweist.

17. Verfahren zum Betrieb einer Objekterkennungsvorrichtung (1) gemäß einem der Ansprüche 1 bis 16, **dadurch gekennzeichnet, dass** in einem ersten Verfahrensschritt von der Objekterkennungsvorrichtung (1) Objektbewegungen und/oder Objektabstände zu dem Arbeitsmittel detektiert werden und in einem zweiten Verfahrensschritt eine Verletzung von zumindest einer Warnzone (17) und/oder einer Schutzfeldzone (18) um das Arbeitsmittel detektiert und an eine Ausgabeeinheit (19) ausgegeben wird.

## Claims

1. An object detection device (1) having at least one first object detector (3) for detecting obstacles in the area of movement of a work equipment, the object detector (3) being formed in the manner of a radar module (4) with one or more connections (5) for radar antennas (6), wherein a respective radar antenna (6) is connected to the radar module (4) by means of a dielectric waveguide (7), the radar antennas (6) being formed in the manner of frequency-swinging leakage wave antennas with the dielectric waveguide (7), and wherein the frequency-swinging leaky wave antennas are formed as planar holographic antennas (10), **characterised in that** the planar holographic antennas (10) are arranged and dimensioned on the dielectric waveguide (7) in such a way that the leaky wave antennas (10), which can be moved from one holographic antenna (10) to another, are arranged and dimensioned in such a way that the frequency-swinging leaky wave antennas (10) can be moved from one holographic antenna (10) to another, holographic antenna (10) and decreasing over the length of the dielectric waveguide (7) is compensated for by an antenna geometry changed from one holographic antenna (10) to another holographic antenna (10).

2. The object detection device (1) according to claim 1, **characterised in that** the radar module (4) is formed in the manner of a frequency-modulating radar module or pulse radar module.

3. The object detection device (1) according to claim 1 or 2, **characterised in that** at least one transmitting channel (8) and one receiving channel (9) of the radar module (4) ares connected via the dielectric waveguide (7) to the frequency-swinging leaky wave antennas, and **in that** in operation of the radar module (4) the transmit channel (8) and the receive channel (9) are switched in parallel or periodically.

4. The object recognition device (1) according to one of claims 1 to 3, **characterised in that** the holographic antennas (10) are each formed from a plurality of metallic patch antennas (11) arranged on a substrate (12) of the dielectric waveguide (7).

5. The object recognition device (1) according to claim 4, **characterised in that** said metallic patch antennas (11) are each formed of a layer of titanium and a layer of aluminum vapor-deposited thereon.

6. The object recognition device (1) according to one of claims 4 or 5, **characterised in that** the substrate (12) is formed with or without continuous metallization.

7. The object detection device (1) according to one of claims 4 to 6, **characterised in that** a respective patch antenna (11) is formed from two patch elements each and has a width of about 1.3 mm and a total length of about 3 mm.

8. The object recognition device (1) according to any one of claims 3 to 7, **characterised in that** each holographic antenna (10) is formed of up to 15 patch antennas (11).

9. The object recognition device (1) according to one of the claims 3 to 8, in that in the case of an arrangement of three holographic antennas (10) on a dielectric waveguide (7), a respective holographic antenna (10) is formed from less than four patch antennas (11).

10. The object detection device (1) according to one of claims 4 to 9, **characterised in that** a distance (a) of the patch antennas (11) on the dielectric waveguide (7) is selected such that the distance (a) is smaller than the smallest object diameter (d) to be detected.

11. The object detection device (1) according to one of claims 1 to 10, **characterised in that** the pivoting range of a respective holo-graphic antenna (10) is approximately +/- 60°.

12. The object recognition device (1) according to one of claims 1 to 11, **characterised in that** an extremely arranged holographic antenna (10) is arranged at a free end (13) of the dielectric waveguide (7) remote from the radar module (4) at a distance (b) from the end (13), and **in that** the distance (b) is selected such that the holographic antenna (10) is at a distance (b) from the end (13), **in that** it requires a signal transit time which is greater than a signal transit time from each holographic antenna (10) on the dielectric waveguide (7) and greater than the signal transit time from the end (13) of the dielectric waveguide (7) to an assumed object (14) located farthest.

13. The object detection device (1) according to one of claims 1 to 12, **characterised in that** the object detection device (1) comprises several radar modules (4) and several holographic antennas (10),
and **in that** the radar modules (4) are combined into a network which preferably has a hierarchical structure.

14. The object detection device (1) according to claim 13, **characterised in that** the object data determined by a master radar module (15) of the object detection device (1) are linked with operating data of a control and/or regulating unit (16) of the working means for controlling the movement of the working means.

15. The object detection device (1) according to one of claims 1 to 14, **characterised in that** individual frequency bands in a frequency range of approximately 60 to 160 GHz are used by the radar modules (4).

16. The object detection device (1) according to claim 15, **characterised in that** one frequency band has a bandwidth of about 10 GHz.

17. A method for operating an object recognition device (1) according to one of the claims 1 to 16, **characterised in that** in a first method step object movements and/or object distances to the working medium are detected by the object recognition device (1) and in a second method step a violation of at least one warning zone (17) and/or a protective field zone (18) around the working medium is detected and output to an output unit (19).

## Revendications

1. Dispositif de détection d'objets (1) avec au moins un premier détecteur d'objets (3) pour la détection d'obstacles dans la zone de mouvement d'un équipement de travail, le détecteur d'objets (3) étant formé à la manière d'un module radar (4) avec une ou plusieurs connexions (5) pour des antennes radar (6), dans lequel une antenne radar (6) respective est reliée au module radar (4) au moyen d'un guide d'ondes diélectrique (7), les antennes radar (6) étant formées à la manière d'antennes à ondes de fuite à oscillation de fréquence avec le guide d'ondes diélectrique (7), et dans lequel les antennes à ondes de fuite à oscillation de fréquence sont formées comme antennes holographiques planes (10), **caractérisé en ce que** les antennes holographiques planes (10) sont disposées et dimensionnées sur le guide d'onde diélectrique (7) de telle sorte que les antennes à ondes de fuite (10), qui peuvent être déplacées d'une antenne holographique (10) à l'autre, sont disposés et dimensionnés de telle sorte que les antennes à ondes de fuite à oscillation de fréquence (10) peuvent être déplacées d'une antenne holographique (10) à une autre, l'antenne holographique (10) et décroissante sur la longueur du guide d'onde diélectrique (7) est compensée par une géométrie d'antenne modifiée d'une antenne holographique (10) à une autre antenne holographique (10).

2. Dispositif de détection d'objets (1) selon la revendication 1, **caractérisé en ce que** le module radar (4) est formé comme module radar à modulation de fréquence ou d'un module radar à impulsions.

3. Dispositif de détection d'objets (1) selon la revendication 1 ou 2, **caractérisé en ce qu'**au moins un canal d'émission (8) et un canal de réception (9) du module radar (4) sont reliés par l'intermédiaire du guide d'ondes diélectriques (7) aux antennes à ondes de fuite à oscillation de fréquence, et **en ce que**, lors du fonctionnement du module radar (4), le canal d'émission (8) et le canal de réception (9) sont commutés en parallèle ou périodiquement.

4. Dispositif de reconnaissance d'objets (1) selon l'une des revendications 1 à 3, **caractérisé en ce que** les antennes holographiques (10) sont formées chacune d'une pluralité d'antennes planaires métalliques (11) disposées sur un substrat (12) du guide d'ondes diélectrique (7).

5. Dispositif de reconnaissance d'objets (1) selon la revendication 4, **caractérisé en ce que** lesdites antennes planaires métalliques (11) sont chacune formées d'une couche de titane et d'une couche d'aluminium déposée en phase vapeur sur celle-ci.

6. Dispositif de reconnaissance d'objets (1) selon l'une des revendications 4 ou 5, **caractérisé en ce que** le substrat (12) est formé avec ou sans métallisation continue.

7. Dispositif de détection d'objets (1) selon l'une des revendications 4 à 6, **caractérisé en ce qu'**une antenne planaire respective (11) est formée de deux éléments planaire chacun et a une largeur d'environ 1,3 mm et une longueur totale d'environ 3 mm.

8. Dispositif de reconnaissance d'objets (1) selon l'une des revendications 3 à 7, **caractérisé en ce que** chaque antenne holographique (10) comprend jusqu'à 15 antennes planaires (11).

9. Dispositif de reconnaissance d'objets (1) selon l'une des revendications 3 à 8, **caractérisé en ce que**, dans le cas d'une disposition de trois antennes holographiques (10) sur un guide d'ondes diélectrique (7), une antenne holographique (10) respective est formée de moins de quatre antennes planaires (11).

10. Dispositif de détection d'objets (1) selon l'une des revendications 4 à 9, **caractérisé en ce qu'**une distance (a) des antennes planaires (11) sur le guide d'ondes diélectrique (7) est choisie de telle sorte que la distance (a) soit inférieure au plus petit diamètre d'objet (d) à détecter.

11. Dispositif de détection d'objets (1) selon l'une des revendications 1 à 10, **caractérisé en ce que** la plage de pivotement d'une antenne holographique respective (10) est d'environ +/- 60°.

12. Dispositif de reconnaissance d'objets (1) selon l'une des revendications 1 à 11, **caractérisé en ce qu'**une antenne holographique (10) extrêmement disposée est disposée à une extrémité libre (13) du guide d'ondes diélectrique (7) éloignée du module radar (4) à une distance (b) de l'extrémité (13), et **en ce que** la distance (b) est choisie de telle sorte que l'antenne holographique (10) se trouve à une distance (b) de l'extrémité (13), **en ce qu'**il nécessite un temps de transit du signal qui est supérieur à un temps de transit du signal de chaque antenne holographique (10) sur le guide d'onde diélectrique (7) et supérieur au temps de transit du signal de l'extrémité (13) du guide d'onde diélectrique (7) à un objet supposé (14) situé à la distance de la plus éloignée.

13. Dispositif de détection d'objets (1) selon l'une des revendications 1 à 12, **caractérisé en ce que** le dispositif de détection d'objets (1) comprend plusieurs modules radar (4) et plusieurs antennes holographiques (10),
et **en ce que** les modules radar (4) sont combinés en un réseau qui a de préférence une structure hiérarchique.

14. Dispositif de détection d'objets (1) selon la revendication 13, **caractérisé en ce que** les données d'objet déterminées par un module radar principal (15) du dispositif de détection d'objets (1) sont reliées aux données de fonctionnement d'une unité de commande et/ou de régulation (16) du moyen de travail pour commander le mouvement du moyen de travail.

15. Appareil de détection d'objets (1) selon l'une des revendications 1 à 14, **caractérisé en ce que** les modules radar (4) utilisent des bandes de fréquences individuelles dans une plage de fréquences d'environ 60 à 160 GHz.

16. Dispositif de détection d'objets (1) selon la revendication 15, **caractérisé en ce qu'**une bande de fréquences a une largeur de bande d'environ 10 GHz.

17. Procédé pour faire fonctionner un dispositif de reconnaissance d'objets (1) selon l'une des revendications 1 à 16, **caractérisé en ce que**, dans une première étape de procédé, des mouvements d'objets et/ou des distances d'objets par rapport au milieu de travail sont détectés par le dispositif de reconnaissance d'objets (1) et, dans une deuxième étape de procédé, une violation d'au moins une zone d'avertissement (17) et/ou d'une zone de champ de protection (18) autour du milieu de travail est détectée et délivrée à une unité de sortie (19).
